# EUROPÄISCHE PATENTSCHRIFT

(11) **EP 1 716 031 B1**
(45) Veröffentlichungstag und Bekanntmachung des Hinweises auf die Patenterteilung: **29.10.2008**
(21) Anmeldenummer: 05715285.2
(22) Anmeldetag: 10.02.2005
(51) Int. Cl.: B60T 13/66

(54) **BREMSKRAFTERZEUGER FÜR EINE HYDRAULISCHE FAHRZEUGBREMSANLAGE**
BRAKING FORCE GENERATOR FOR A HYDRAULIC VEHICLE BRAKE SYSTEM
GENERATEUR DE FORCE DE FREINAGE POUR SYSTEME DE FREINAGE HYDRAULIQUE POUR VEHICULE

(30) Priorität: 17.02.2004 DE 102004007659
(43) Veröffentlichungstag der Anmeldung: 02.11.2006
(73) Patentinhaber: Lucas Automotive GmbH, 56070 Koblenz (DE)
(72) Erfinder: SCHLÜTER, Peter, 56206 Kammerforst (DE)
(74) Vertreter: Thum, Bernhard
(86) Internationale Anmeldenummer: PCT/EP2005/001325
(87) Internationale Veröffentlichungsnummer: WO 2005/080168

(56) Entgegenhaltungen:
- DE-A1- 4 003 957
- DE-C1- 4 405 092
- DE-C1- 19 729 158
- US-B1- 6 494 546

## Beschreibung

Die vorliegende Erfindung betrifft einen Bremskrafterzeuger für eine hydraulische Fahrzeugbremsanlage mit einem Krafteingangsglied, das mit einem Bremspedal koppelbar oder gekoppelt und in einem Basisgehäuse des Bremskrafterzeugers verlagerbar ist, einem Hauptbremszylinder, in dem ein Primärkolben verlagerbar geführt ist, wobei der Primärkolben mit dem Hauptbremszylinder eine Primärdruckkammer zur Erzeugung eines hydraulischen Bremsdrucks begrenzt, einer elektromagnetischen Betätigungskraft-Erzeugungseinrichtung zum Ausüben einer Betätigungskraft auf den Primärkolben und wenigstens einer Betriebsstellungs-Erfassungseinrichtung zur Erfassung der gegenwärtigen Betriebsstellung des Bremskrafterzeugers, wobei die Betätigungskraft-Erzeugungseinrichtung nach Maßgabe einer Bremspedalbetätigung ansteuerbar ist.

Bei den heute üblichen Bremssystemen wird der zur Beaufschlagung der Radbremse am Fahrzeug notwendige hydraulische Bremsdruck überwiegend mittels eines Hauptbremszylinders erzeugt. Hierzu ist die Einleitung einer Betätigungskraft auf den genannten Hauptbremszylinder notwendig, welche in Reaktion auf eine Betätigung des Bremspedals durch den Fahrzeugführer erzeugt wird. Zur Verbesserung des Betätigungskomforts wird üblicherweise die eigentliche Bremspedalkraft mittels eines Bremskraftverstärkers um einen vorbestimmten Prozentsatz angehoben, so dass die notwendigen Bremspedalbetätigungskräfte für eine gewünschte Fahrzeugverzögerung derart klein gehalten werden können, dass es jedem Fahrer ohne Anstrengung möglich ist, das Fahrzeug adäquat abzubremsen.

Ein derartiges Bremssystem mit Bremskraftverstärker ist beispielsweise aus der DE 44 05 092 bekannt. Der Bremskraftverstärker gemäß diesem Stand der Technik ist mit einer elektromagnetischen Hilfssteuerung ausgeführt, die einen ansteuerbaren Elektromagneten aufweisen, über den ein Magnetanker zur Erzeugung einer Bremskraft verlagert werden kann. Zur Ansteuerung der elektromagnetischen Hilfssteuerung ist es erforderlich, Leitungen zu dem Elektromagneten zu führen. Ferner müssen Leitungen zu verschiedenen Sensoren geführt werden, über die der Betriebszustand des Bremskraftverstärkers ermittelt werden kann. Diese Leitungen müssen mit einer übergeordneten Steuereinheit verbunden werden. Hierzu ist in der Praxis ein erheblicher Verkabelungsaufwand nötig, wobei eine Vielzahl verschiedener elektrischer Steckverbinder eingesetzt wird, die an verschiedenen Stellen des Bremskraftverstärkers angeordnet werden.

Bei diesen Bremssystemen wird es inzwischen als Nachteil angesehen, dass der Fahrer durch seine Betätigungsaktion am Bremspedal in jedem Fall den hydraulischen Druck an den Radbremsen beeinflusst. Solange das Einwirken des Fahrers die Bremssituation unterstützt, ist dies unproblematisch. Sobald der Fahrer aber bezogen auf die tatsächliche Bremssituation falsch reagiert, indem er beispielsweise zu viel oder zu wenig Bremsdruck einsteuert, kann das Bremsverhalten, insbesondere der Bremsweg sowie die Spurtreue, des Fahrzeugs verschlechtert werden, was im schlimmsten Fall zu einem Unfall führen kann.

Moderne Fahrzeugregelsysteme (ABS, ESP, TC etc.) sind heutzutage in der Lage, die optimale, notwendige Bremsleistung in den physikalische Grenzen anhand des momentanen Fahrzustands des Fahrzeugs zu ermitteln und somit eine Bremsung zu optimieren. Basis hierfür ist es allerdings, dass der oben genannte direkte Einfluss des Fahrers auf den Bremsdruck verhindert wird. Ferner wird es inzwischen auch als unkomfortabel angesehen, dass der Fahrer am Bremspedal die Wirkung des Fahrzeugregelsystems spürt, wie beispielsweise bei Aktivierung des ABS ein wiederholtes Rütteln am Bremspedal.

Um diesen mit Fahrzeugregelsystemen verbundenen Anforderungen Rechnung zu tragen, wird bei modernen Bremssystemen bereits das Bremspedal von der Bremskrafterzeugung entkoppelt, wobei dann die Bremspedalbetätigung nur noch zur Ermittlung des Verzögerungswunsches des Fahrers dient. Die eigentliche Bremskrafterzeugung, beispielsweise zur Betätigung des Hauptbremszylinders, erfolgt dann durch eine separate Bremskrafterzeugungseinrichtung und zwar nur noch basierend auf Steuerungsdaten eines elektronischen Steuergeräts. Hierdurch kann vorab überprüft werden, ob beispielsweise die gewünschte Fahrzeugverzögerung nicht die, durch die Fahrzeugregelsysteme (ABS, ESP, TC etc.) ermittelten, momentan gültigen physikalischen Grenzen hinsichtlich Bremsweg und Spurtreue überschreiten würde. Gleichzeitig kann natürlich auch eine vom Fahrer zu gering eingesteuerte Verzögerung zur Minimierung des Anhalteweges in Notsituationen vom Steuergerät durch Einsteuerung eines höheren Bremsdrucks ausgeglichen werden.

Ein derartiges System ist beispielsweise im Stand der Technik gemäß der EP 1 070 006 beschrieben. Es hat sich jedoch gezeigt, dass derartige Bremssysteme verhältnismäßig kostenintensiv in der Herstellung sind und einen erheblichen gerätetechnischen Aufwand erfordern, um auch dann einen zuverlässigen Bremsbetrieb gewährleisten zu können, wenn die Mittel zu Bremskrafterzeugung einmal ausfallen sollten. Auch bei diesem Stand der Technik ist es erforderlich, eine Vielzahl von Sensoren zur Überwachung des gegenwärtigen Betriebszustands der Bremskrafterzeugungseinrichtung bereitzustellen, die mit einer übergeordneten Steuereinrichtung zur Signalübermittlung verbunden sind. Es ergeben sich die bereits vorstehend skizzierten Nachteile, nämlich einen hoher Verkabetungsaufwand und eine Vielzahl von zu kontaktierenden Verbindern (siehe auch die gattungsgemäße DE-C-197 29 158).

Es ist demgegenüber eine Aufgabe der vorliegenden Erfindung, einen Bremskrafterzeuger der eingangs bezeichneten Art bereitzustellen, welcher eine einfach montierbare und kostengünstige Verkabelung sowie einen zuverlässigen Betrieb gewährleistet.

Diese Aufgabe wird durch einen Bremskrafterzeuger mit den eingangs bezeichneten Merkmalen gelöst, bei welchem der Bremskrafterzeuger mit einem elektrischen Zentralverbinder versehen ist, in dem Kontaktelemente zum Kontaktieren elektrischer Leitungen zu der Betätigungskraft-Erzeugungseinrichtung und zu der Betriebsstellungs-Erfassungseinrichtung integral vorgesehen sind.

Durch die Erfindung ist es möglich, mit der Bereitstellung des Zentralverbinders den Verkabelungsaufwand des Bremskrafterzeugers gering zu halten, wobei der Zentralverbinder alle Kontaktelemente aufweist, die zur Ansteuerung des Bremskrafterzeugers erforderlich sind. So muss bei der Montage des Bremskrafterzeugers lediglich der Zentralverbinder mit der Fahrzeugelektronik gekoppelt werden, um diesen ansteuern zu können. Dadurch kann der Verkabelungsaufwand verhältnismäßig klein gehalten werden. Insbesondere kann dadurch verhindert werden, dass eine Vielzahl von verschiedenen elektrischen Verbindern an verschiedenen Stellen des Bremskrafterzeugers kontaktiert werden muss.

Es ist darauf hinzuweisen, dass im Rahmen dieser Erfindungsbeschreibung der Begriff "Bremskrafterzeuger" sowohl eine Einrichtung betreffen soll, die wie ein Bremskraftverstärker lediglich die über das Bremspedal ausgeübte Betätigungskraft verstärkt, als auch eine Einrichtung betreffen soll, bei der die über das Bremspedal ausgeübte Betätigungskraft weitgehend ungenutzt bleibt und die Bremskraft im Wesentlichen vollständig von dem Bremskrafterzeuger nach Maßgabe der Pedalbetätigungskraft erzeugt wird. Bei beiden Einrichtungstypen ist das erfindungsgemäße Prinzip anwendbar.

Eine Weiterbildung der Erfindung sieht vor, dass der Bremskrafterzeuger ein Steuerventil, eine Kammeranordnung und einen elektromagnetischen Aktuator aufweist, wobei die Kammeranordnung mit einer Unterdruckkammer und einer von der Unterdruckkammer durch eine bewegliche Wand getrennte und über das Steuerventil fluidisch miteinander verbindbare Arbeitskammer ausgebildet ist und wobei die Betriebsstellungs-Erfassungseinrichtung, insbesondere als Positionssensor, zum Erfassen der gegenwärtigen Position der beweglichen Wand ausgebildet ist.

Ferner kann in diesem Zusammenhang vorgesehen sein, dass die Kammeranordnung als Tandem-Kammeranordnung mit einer ersten Kammeranordnung und einer von dieser getrennten zweiten Kammeranordnung ausgebildet ist, wobei die erste Kammeranordnung eine erste Unterdruckkammer und eine von dieser durch eine erste bewegliche Wand getrennte erste Arbeitskammer aufweist, wobei weiter die zweite Kammeranordnung eine zweite Unterdruckkammer und eine von dieser durch eine zweite bewegliche Wand getrennte zweite Arbeitskammer aufweist, wobei die erste und zweite Kammeranordnung über das Steuerventil mit Druck beaufschlagbar sind.

Erfindungsgemäß ist es erforderlich, den innerhalb der Kammeranordnung liegenden Aktuator elektrisch anzusteuern. Hierzu müssen elektrischen Leitungen durch die Kammeranordnung verlaufen. Dabei kann vorgesehen sein, dass die elektrischen Leitungen von dem Aktuator zu dem Zentralverbinder durch ein zumindest einen Teil der Kammeranordnung durchsetzendes Führungselement, insbesondere Führungsrohr, hindurch geführt sind. Vorzugsweise ist das Führungselement, insbesondere das Führungsrohr, oder die mit diesem zusammenwirkenden Komponenten des Bremskrafterzeugers an den Kontaktstellen mit Dichtungen versehen, um die Funktionsweise der Kammeranordnung nicht zu beeinträchtigen.

Um die einzelnen Bewegungen verschiedener Komponenten des erfindungsgemäßen Bremskrafterzeugers durch die Verkabelung nicht zu behindern, sieht eine Weiterbildung der Erfindung vor, dass die elektrischen Leitungen von dem Aktuator zu dem Zentralverbinder zumindest in einem Teil der Kammeranordnung spiralförmig oder schraubenförmig verlaufen. Dadurch können die Leitungen Bewegungen einzelner Komponenten ausgleichen.

Vorzugsweise ist der Bremskrafterzeuger mit einer Pedalbetätigungs-Erfassungseinrichtung, insbesondere mit einem an einer Drehachse des Bremspedals angeordneten Drehwinkelsensor, zur Erfassung einer aktuellen Auslenkung des Bremspedals ausgebildet. Anhand der erfassten Pedalbetätigung kann dann der Bremskrafterzeuger angesteuert werden.

Ferner kann der erfindungsgemäße Bremskrafterzeuger eine mit dem Krafteingangsglied koppelbare oder gekoppelte Pedalgegenkraft-Simulationseinrichtung aufweisen. In diesem Zusammenhang kann in einer Weiterbildung der Erfindung vorgesehen sein, dass die Pedalgegenkraft-Simulationseinrichtung mit einem Pedalgegenkraft-Hydrauliksystem ausgebildet ist, wobei das Pedalgegenkraft-Hydrauliksystem mit einem elektrisch ansteuerbaren Trennventil versehen ist, das in einer ersten Stellung, vorzugsweise seiner Passivstellung, das Pedalgegenkraft-Hydrauliksystem und das Krafteingangsglied hydraulisch voneinander entkoppelt und eine im Wesentlichen ungedämpfte Bewegung des Krafteingangsglieds zulässt und das in einer zweiten Stellung, vorzugsweise seiner Aktivstellung, das Pedalgegenkraft-Hydrauliksystem und das Krafteingangsglied hydraulisch miteinander koppelt.

Auch im Hinblick auf die Einbindung dieser Komponenten in die Fahrzeugelektronik kann erfindungsgemäß vorgesehen sein, dass elektrische Kontaktelemente zum Kontaktieren elektrischer Leitungen zu der Pedalbetätigungs-Erfassungseinrichtung oder/und zu dem Trennventil in dem Zentralverbinder oder in einem in räumlicher Nähe zu dem Zentralverbinder angeordneten Zusatzverbinder integriert sind.

Zur Ansteuerung des erfindungsgemäßen Bremskrafterzeugers ist vorzugsweise eine elektronische Steuereinrichtung vorgesehen, die die Betätigungskraft-Erzeugungseinrichtung nach Maßgabe eines Ausgangssignals der Betriebsstellungs-Erfassungseinrichtung ansteuert. Eine Weiterbildung der Erfindung sieht in diesem Zusammenhang vor, dass die elektronische Steuereinrichtung mit der Pedalbetätigungs-Erfassungseinrichtung oder/und dem Trennventil elektrisch verbunden ist.

Eine besonders raumsparende Anordnung und einfache Montage ergibt sich im Hinblick auf die Steuereinrichtung dann, wenn diese mechanisch unmittelbar an dem Zentralverbinder und gegebenenfalls an dem wenigstens einen Zusatzverbinder angebracht und elektrisch mit diesen verbunden ist.

Darüber hinaus kann erfindungsgemäß auch dadurch Bauraum eingespart werden, dass der Zentralverbinder integral mit der Betriebsstellungs-Erfassungseinrichtung ausgebildet ist. Dies kann beispielsweise dadurch erreicht werden, dass der Zentralverbinder in das Gehäuse der Betriebsstellungs-Erfassungseinrichtung integriert ist. Ein weiterer Vorteil dieser erfindungsgemäßen Ausführungsform liegt darin, dass sich dadurch die Anzahl der zu montierenden Teile reduzieren lässt.

Die Montage wird ferner dadurch erleichtert, dass der Zentralverbinder mit einem Anschlussverbinder zum Kontaktieren elektrischer Leitungen zu der Betätigungskraft-Erzeugungseinrichtung gekoppelt oder koppelbar ist. In diesem Zusammenhang kann erfindungsgemäß auch vorgesehen sein, dass der Anschlussverbinder integral mit einem Aufnahmelement ausgebildet ist, wobei das Aufnahmeelement die Betriebsstellungs-Erfassungseinrichtung an dem Basisgehäuse festlegt. So ist es möglich, zunächst das Aufnahmeelement an dem Basisgehäuse zu montieren und daraufhin die integral mit dem Zentralverbinder ausgebildete Betriebsstellungs-Erfassungseinrichtung an dem Aufnahmeelement anzubringen. Sodann kann die Steuereinrichtung auf den Zentralverbinder aufgesteckt werden und dabei auch gegebenenfalls mit dem Zusatzverbinder gekoppelt werden. Es ergibt sich eine kompakte, raumsparende und leicht zu montierende Anordnung. Vorzugsweise ist auch vorgesehen, dass der Zentralverbinder und gegebenenfalls der Zusatzverbinder an dem Basisgehäuse festgelegt oder festlegbar sind.

Die Erfindung betrifft ferner ein Bremssystem für ein Kraftfahrzeug mit einem Bremskrafterzeuger der vorstehend beschriebenen Art. Der Bremskrafterzeuger ist in herkömmlicher Weise zwischen einem Bremspedal und der weiteren hydraulischen Bremsanlage in einer Anordnung eingebaut, wie sie an sich aus dem Stand der Technik bereits bekannt ist.

Die Erfindung wird im Folgenden anhand der beiliegenden Figuren erläutert. Es stellen dar:
- Fig.1: eine schematische Übersichtsdarstellung des erfindungsgemäßen Bremskrafterzeugers und der mit diesem gekoppelten Fahrzeugkomponenten;
- Fig.2: eine vergrößerte teilweise geschnittene Seitenansicht des erfindungsgemäßen Bremskrafterzeugers;
- Fig.3: eine vergrößerte Teilschnittansicht des in Fig. 2 mit III bezeichneten Bereichs;
- Fig.4: eine Ansicht entlang der Schnittlinie IV-IV, wobei geschnittene Teile der Kammeranordnung und der beweglichen Wand weggelassen wurden;
- Fig.5: eine Ansicht, in Betrachtungsrichtung entsprechend Pfeil V aus Fig. 2;
- Fig.6: eine Ansicht entsprechend Fig. 2, jedoch mit um 90° verdrehtem Bremskrafterzeuger;
- Fig.7: eine Ansicht entsprechend Fig. 6, jedoch mit um weitere 90° verdrehtem Bremskrafterzeuger und mit aufgesetzter Steuereinrichtung und
- Fig.8: eine Ansicht in Betrachtungsrichtung entsprechend Pfeil VIII aus Fig. 7.

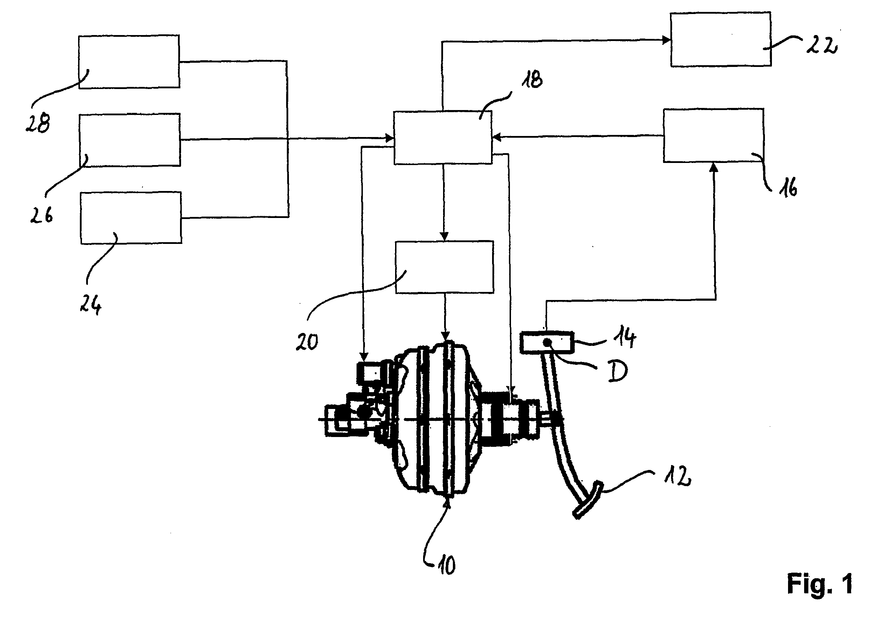

In Fig. 1 ist ein erfindungsgemäßer Bremskrafterzeuger allgemein mit 10 bezeichnet und in einer schematischen Übersichtsdarstellung gezeigt. Der Bremskrafterzeuger 10 ist mit einem Bremspedal 12 gekoppelt. Eine Pedalbetätigung wird über einen um eine Drehachse D angeordneten Drehwinkelsensor 14 erfasst und an eine Drehwinkelsensor-Auswerteeinrichtung 16 übermittelt. Diese übermittelt an eine elektronische Steuereinheit 18 ein der aktuellen Pedalbetätigung entsprechendes Signal. Nach Maßgabe des die aktuelle Pedalbetätigung charakterisierenden Signals steuert die elektronische Steuereinheit 18 eine Vakuumpumpe 20 sowie weitere Komponenten des Bremskrafterzeugers 10 an, wie dies im Folgenden noch erläutert wird. Darüber hinaus steuert die elektronische Steuereinheit 18 eine Bremsleuchte 22 in Reaktion auf eine erfasste Pedalbetätigung an. Die elektronische Steuereinheit 18 erhält ferner Signale von verschiedenen Regelsystemen innerhalb des Fahrzeugs, wie beispielsweise einem elektronischen Stabilitätsprogramm 24, einem Antiblockiersystem 26, einem automatischen Abstandshaltesystem (cruise control) 28 oder dergleichen. Die von diesen Programmen zu der elektronischen Steuereinheit 18 fließenden Signale werden ausgewertet und zur Ansteuerung des erfindungsgemäßen Bremskrafterzeugers genutzt.

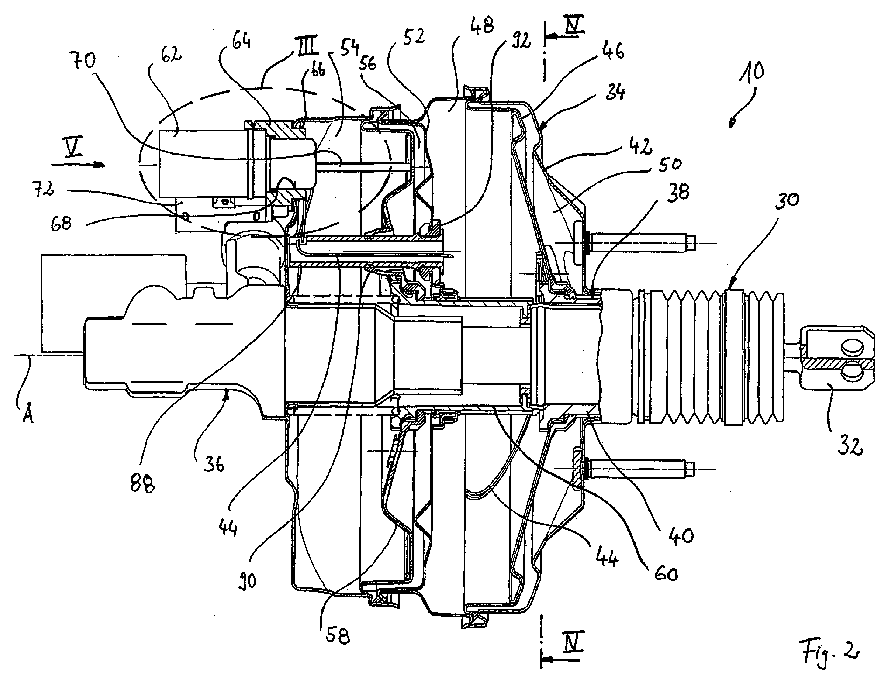

In Fig.2 ist der erfindungsgemäße Bremskrafterzeuger 10 in teilweise geschnittener Seitenansicht dargestellt. Dieser umfasst eine Betätigungseinheit 30, in die ein Krafteingangsglied 32 eingeführt ist. Das Krafteingangsglied 32 ist an seinem freien Ende mit dem in Fig. 2 nicht gezeigten Bremspedal koppelbar. Die Betätigungseinheit 30 ist an eine Kammeranordnung 34 angeschlossen. Auf der von der Betätigungseinheit 30 abgewandten Seite der Kammeranordnung 34 ist ein Teil eines Zylindergehäuses 36 des Hauptbremszylinders erkennbar.

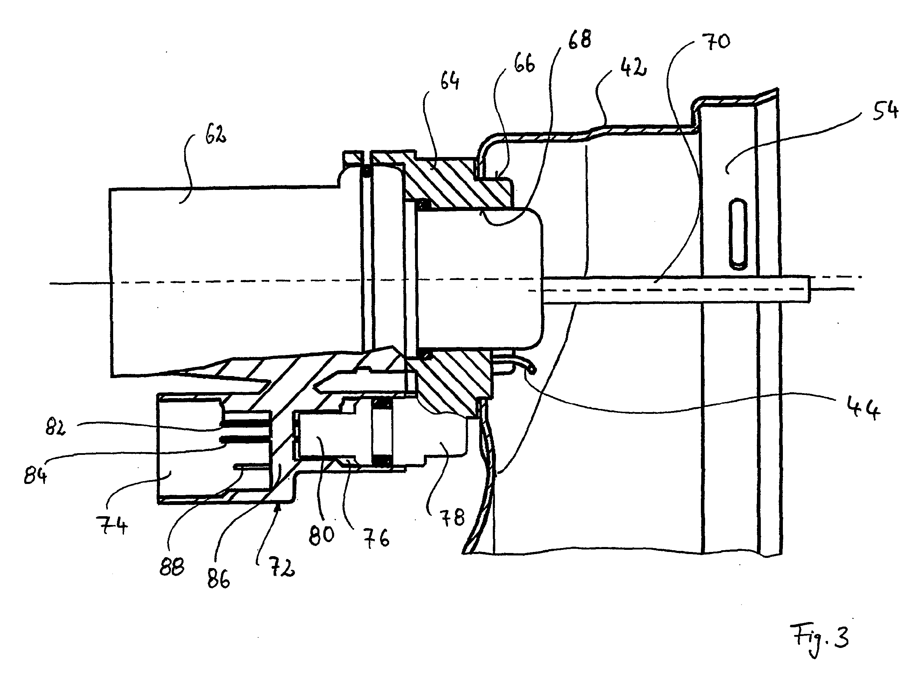

Für eine detaillierte Beschreibung des Aufbaus des erfindungsgemäßen Bremskrafterzeugers 10 soll im Folgenden auch auf die Fig.3 bis 8 Bezug genommen werden. In den in Fig.2 rechten Teil des Bremskrafterzeugers 10 mündet das stangenförmig ausgebildete Krafteingangsglied 32. In diesem Bereich ist ein Steuerventil 38 vorgesehen. Das Steuerventil 38 umfasst ein Steuerventilgehäuse 40, das relativ zu einem Basisgehäuse 42 des Bremskrafterzeugers 10 verlagerbar ist. Das Steuerventil 38 ist elektromechanisch betätigbar und kann über Leitungen 44 angesteuert werden. Zur ausführlichen Erläuterung der Funktion des Steuerventils 38 sei auf die Beschreibung der Patentanmeldung mit dem amtlichen Aktenzeichen DE 10 2004 005 107 verwiesen.

Das Steuerventilgehäuse 40 ist fest mit einer in dem Basisgehäuse 42 angeordneten ersten beweglichen Wand 46 gekoppelt. Die erste bewegliche Wand 46 unterteilt den in Fig.3 rechten Teil der Kammeranordnung 34 in eine Unterdruckkammer 48 und eine Arbeitskammer 50. Die Unterdruckkammer 48 ist über eine in dem Gehäuse 42 festgelegte starre Wand 52 von dem in Fig.2 linken Teil der Kammeranordnung 34 getrennt. Auch dieser Teil der Kammeranordnung 34 umfasst eine Unterdruckkammer 54 und eine Arbeitskammer 56, die durch eine zweite bewegliche Wand 58 voneinander getrennt sind. Die erste bewegliche Wand 46 und die zweite bewegliche Wand 58 sind zum Zwecke einer gemeinsamen Bewegung starr miteinander gekoppelt. Hierzu ist die zweite bewegliche Wand 58 auf einer Koppelhülse 60 befestigt, die fest mit dem Steuerventilgehäuse 40 verbunden ist.

In dem Steuerventilgehäuse 40 ist eine elektrisch ansteuerbare Spule eines elektromagnetischen Aktuators angeordnet. Der Aktuator umfasst ferner einen relativ zu dem Steuerventilgehäuse 40 sowie zu der Spule in Richtung der Längsachse A des Bremskrafterzeugers 10 verlagerbaren magnetischen Anker. Der Anker ist für eine gemeinsame Bewegung in axialer Richtung mit der Ventilhülse 40 gekoppelt.

In dem in Fig. 2 gezeigten Zustand verbindet das Steuerventil 38 jeweils die Unterdruckkammer 48 mit der Arbeitskammer 50 und die Unterdruckkammer 54 mit der Arbeitskammer 56. Die Unterdruckkammern 48 und 54 sind dabei mit einer nicht gezeigten Unterdruckquelle gekoppelt, beispielsweise mit dem Ansaugtrakt eines Verbrennungsmotors eines mit dem Bremskrafterzeuger 10 ausgestatteten Fahrzeugs oder mit der gesondert ausgebildeten Vakuumpumpe 20. Das Krafteingangsglied 32 wird über eine Rückstellfeder in die in Fig.2 gezeigte Stellung vorgespannt.

Fig.2 zeigt ferner, dass in dem Basisgehäuse 42 ein Positionssensor 62 angebracht ist. Der Positionssensor 62 ist über ein Halteelement 64 mit dem Basisgehäuse 42 gekoppelt, wobei das Halteelement mit einem äußeren Haltesitz 66 ausgebildet ist, mit dem es in das Basisgehäuse 42 dichtend eingesetzt ist. Das Halteelement 64 umfasst ferner einen inneren Haltesitz 68, mit dem es einen Schaft des Positionssensors 62 aufnimmt. Der Positionssensor 62 umfasst einen Taststift 70 der federvorgespannt gegen die bewegliche Wand 58 drückt und mit dieser mitbewegt wird, so dass die gegenwärtige Stellung des Taststifts 70, die über den Positionssensor 62 erfasst werden kann, Aufschluss über die gegenwärtige Position der beweglichen Wand 58 gibt.

Fig.3 stellt den in Fig.2 mit III gekennzeichneten Bereich vergrößert dar. Aus Fig.3 ist ersichtlich, dass an dem Positionssensor 62 ein Fortsatz 72 vorgesehen ist, der in Form einer Steckerbuchse ausgebildet ist. Der Fortsatz 72 weist eine in Fig.3 nach links weisende Öffnung 74 und eine in Fig.3 nach rechts weisende Öffnung 76 auf. Die beiden Öffnungen 74 und 76 sind durch eine Trennwand 86 voneinander getrennt. Beide Öffnungen 74 und 76 sind in Form von Steckerbuchsen ausgebildet. Fig.3 zeigt ferner eine der Leitungen 44, die durch die Kammeranordnung 34 gemäß Fig.2 verlaufen.

Auch das Halteelement 64 ist mit einem Fortsatz 78 ausgebildet, der an seinem freien Ende 80 in Form eines Steckverbinders ausgebildet ist. Darin sind nicht gezeigte Kontaktelemente zur Signalweiterleitung der von dem Positionssensor 62 ausgehenden Signale vorgesehen. Zur Herbeiführung des in Fig.3 gezeigten Zustands wird zunächst das Halteelement 64 in das Basisgehäuse 42 eingefügt. Sodann wird der Positionssensor 62 in den inneren Haltesitz 68 eingesteckt und mit Dichtungselementen dort dichtend untergebracht, wobei der Fortsatz 72 das freie Ende 80 des Fortsatzes 78 aufnimmt. Dabei greifen Kontaktstifte 82 und 84 in die Kontaktelemente innerhalb des freien Endes 80 ein und werden leitend mit diesen verbunden. Die Kontaktstifte 82 und 84 erstrecken sich durch die die beiden Öffnungen 74 und 76 voneinander trennende Trennwand 86 und ragen jeweils mit einem freien Ende in die Öffnungen 74 und 76 hinein. Ferner ragt ein weiterer Kontaktstift 88 in die Öffnung 74 hinein. Es ist noch anzumerken, dass auch der Fortsatz 78 mit einem Dichtelement versehen ist, über das dieser dichtend in die Öffnung 76 eingefügt werden kann. Ein der beiden Kontaktstifte 82 und 84 dient als gemeinsame Masse sowohl für den Positionssensor 62 als auch für die Leitung 44 zu dem Aktuator des Steuerventils 38. Der weitere Kontaktstift 88 dient zur Stromversorgung und zur Ansteuerung des Steuerventils 38.

Fig.3 zeigt, dass mit der erfindungsgemäßen Gestaltung eine Kontaktierung sowohl des Positionssensors 62 als auch des Steuerventils 38 über lediglich einen zentralen Steckverbinder erfolgen kann, der in die Öffnung 74 des Fortsatzes 72 eingebracht werden kann und entsprechende Kontaktelemente zur Aufnahme der Kontaktstifte 82, 84 und 88 aufweist.

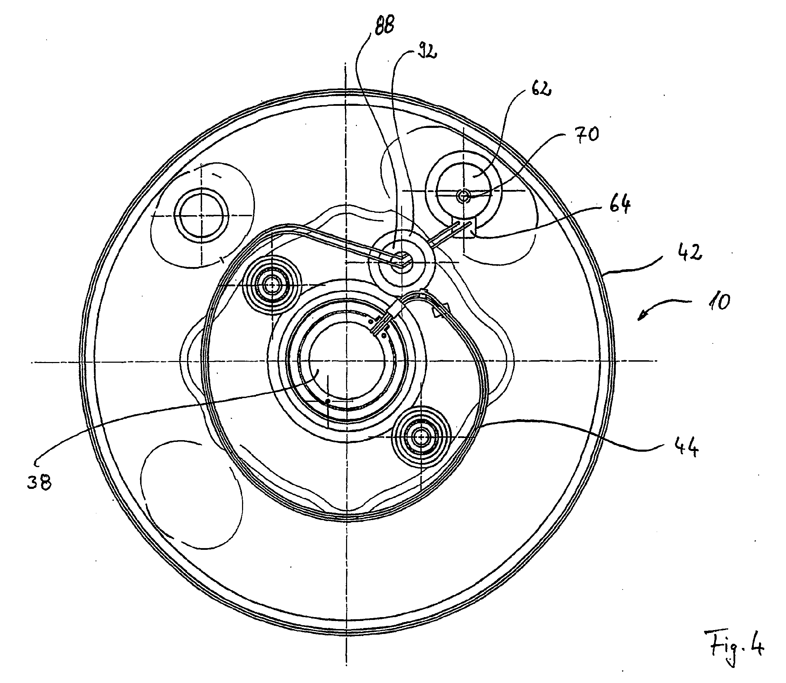

Fig.4 zeigt in Ergänzung dazu den Verlauf der Leitungen 44 innerhalb der Kammeranordnung. Die Leitungen 44 sind, wie aus den Fig.2 und 4 ersichtlich, mit erheblichem Bewegungsspielraum innerhalb der Kammeranordnung 34 angeordnet. Sie verlaufen ausgehend von dem Positionssensor 62 zunächst durch ein Führungsrohr 88, das sich durch die Unterdruckkammer 54 und die Arbeitskammer 56 erstreckt. Dabei ist die bewegliche Wand 58, die sich relativ zu dem Führungsrohr 88 verlagert, mit einer Gleitdichtung 90 versehen, so dass die bewegliche Wand 58 abgedichtet auf den Führungsrohr 88 abgleiten kann und dabei kein Gasaustausch über die in der beweglichen Wand 58 vorgesehene Bohrung erfolgen kann. Darüber hinaus ist die starre Wand 52 mit einem Dichtungselement 92 versehen, so dass auch kein Gasaustausch zwischen der Arbeitskammer 56 und der Unterdruckkammer 48 stattfinden kann. Das Dichtungselement 92 wird über einen Flansch am Ende des Führungsrohrs 88 in Position gehalten.

In der Unterdruckkammer 48 verlaufen die Leitungen 44 - wie vorstehend bereits angedeutet - mit erheblichem Bewegungsspielraum schraubenförmig, so dass sie eine Bewegung des Steuerventils relativ zu dem Basisgehäuse 42 ausgleichen können.

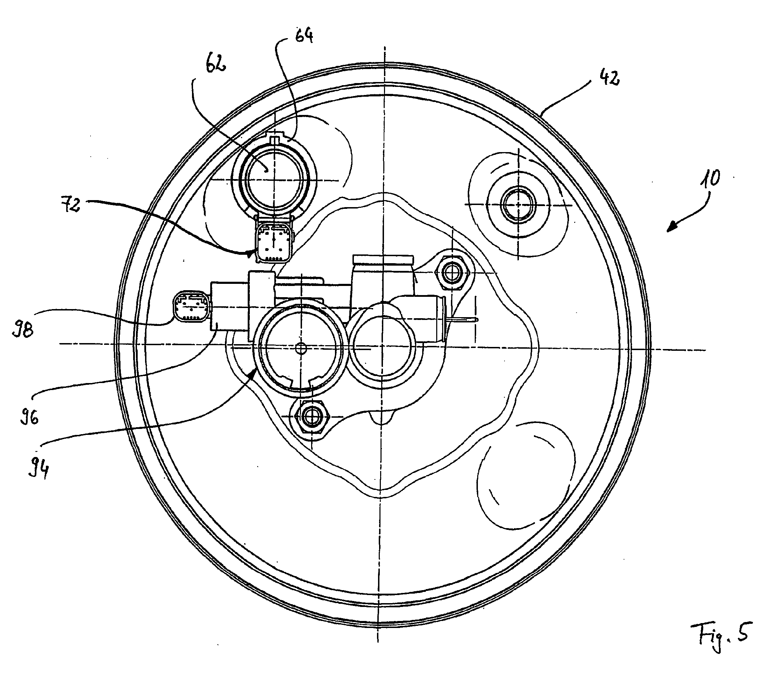

Fig.5 zeigt den Bremskrafterzeuger 10 aus Fig.2 in Blickrichtung gemäß Pfeil V. Dort ist zum Einen links oben der Positionssensor 62 erkennbar, wie er in dem Halteelement 64 innerhalb des Basisgehäuses 42 aufgenommen ist. Darüber hinaus ist der Fortsatz 72 in seiner Gestalt als Steckerbuchse erkennbar. Ferner ist in Fig.5 eine Pedalgegenkraft-Simulationseinrichtung 94 gezeigt. Die Pedalgegenkraft-Simulationseinrichtung 94 ist derart ausgebildet, dass sie hydraulisch mit dem Bremspedal koppelbar ist, um einer Betätigung durch den Fahrer über das Krafteingangsglied 32 eine ihm gewohnte Pedalgegenkraft entgegen zu setzen, auch wenn der Bremskrafterzeuger 10 derart funktioniert, dass eine Bremsdruckerzeugung innerhalb des Zylindergehäuses 36 über den Primärkolben allein vermittels des Steuerventils 38 ohne mechanische Nutzung der über das Krafteingangsglied 32 ausgeübten Pedalbetätigungskraft erfolgt. Die Pedalgegenkraft-Simulationseinrichtung ist mit einem Trennventil 96 versehen, vermittels dessen die hydraulische Kopplung mit bzw. Entkopplung von dem Bremspedal erfolgen kann. Bei Entkopplung von dem Bremspedal bleibt die Pedalgegenkraft-Simulationseinrichtung im Wesentlichen wirkungslos. Ferner kann die Pedalgegenkraft-Simulationseinrichtung 94 auch mit verschiedenen Mess-Sensoren zur Erfassung des Hydraulikdrucks oder anderer Betriebsgrößen ausgebildet sein. Zur Ansteuerung des Trennventils 96, sowie zum Abgreifen der Signale von dessen Sensorik ist eine weitere Steckerbuchse 98 vorgesehen, die in unmittelbarer räumlicher Nähe zu dem als Steckerbuchse ausgebildeten Fortsatz 72 ausgebildet ist.

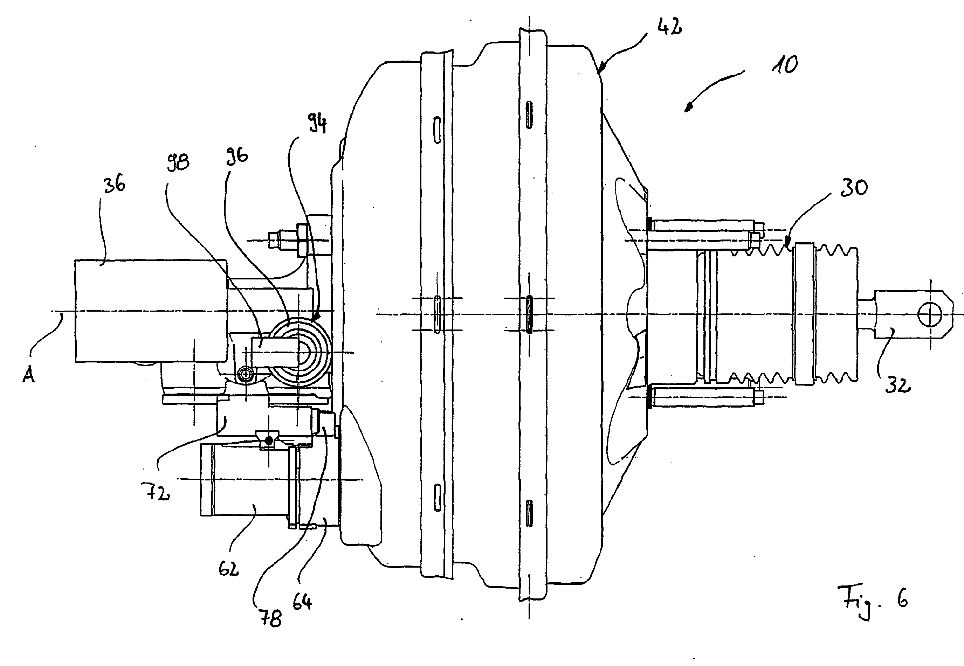

Fig.6 zeigt die Anordnung in einer Ansicht entsprechend Fig.2, jedoch um 90° zur Zeichenebene hin verdreht, so dass klar wird, in welcher räumlichen Nähe die beiden Steckerbuchsen 72 und 98 angeordnet sind.

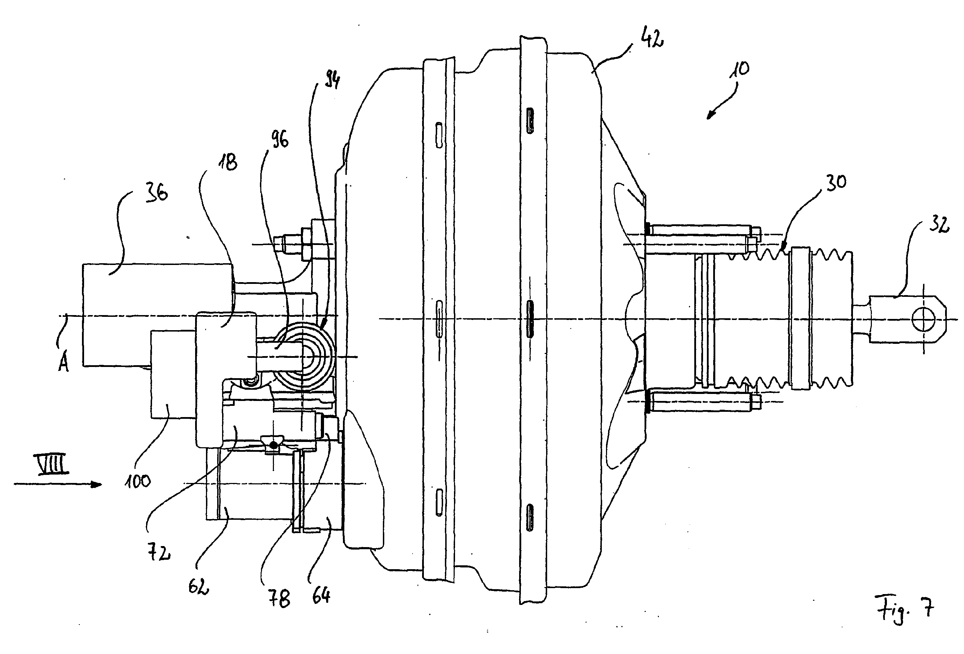

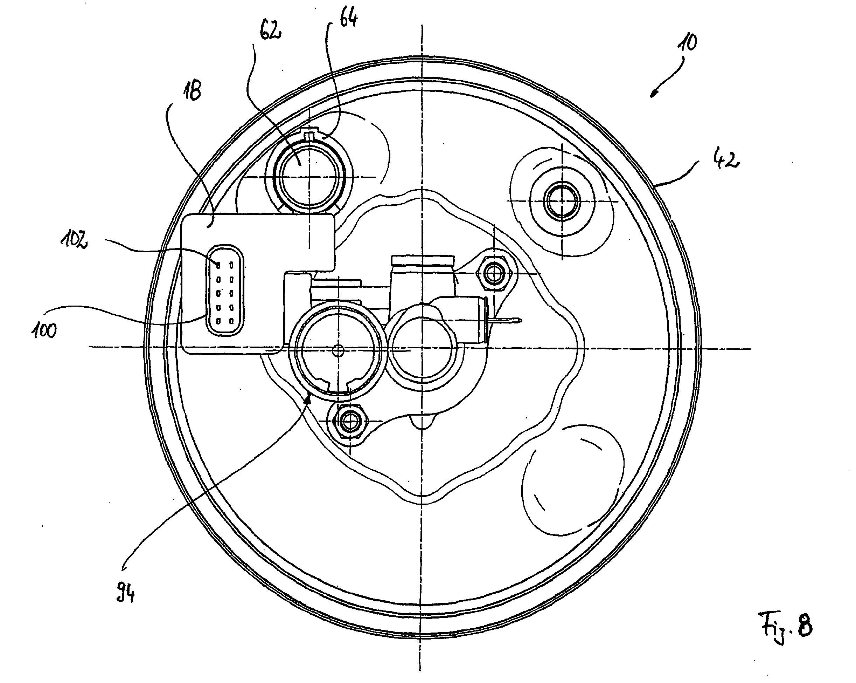

Die Darstellungen von Fig.7 und 8 entsprechen den Darstellungen von Fig.5 und 6. Allerdings ist in diesen Darstellungen jeweils die elektronische Steuereinheit 18 an dem Bremskrafterzeuger 10 derart angebracht, dass sie mit entsprechenden Steckern (aus Fig.7 und 8 nicht ersichtlich) in die Steckerbuchsen 72 und 98 eingreift und somit elektrisch leitend mit den entsprechenden Kontaktelementen verbunden ist. Dadurch empfängt die Steuereinheit 18 sämtliche erforderlichen Signale von dem Positionssensor 62 sowie von weiteren Sensoren und kann das Steuerventil 38 entsprechend ansteuern. Die Steuereinheit 18 weist eine Steckerbuchse 100 auf, die mit entsprechenden Kontaktstiften 102 ausgebildet ist. In die Steckerbuchse 100 kann ein Stecker zur Kopplung der elektronischen Steuereinheit 18 mit der Fahrzeugelektronik zur Signalübermittlung und Stromversorgung eingesteckt werden.

Im Folgenden soll unter Bezugnahme auf Fig.2 die Funktionsweise des erfindungsgemäßen Bremskrafterzeugers kurz erörtert werden.

In Folge einer Betätigung des Bremspedals wird das Krafteingangsglied 32 mit der Kraft F beaufschlagt und entlang der Längsachse A des Bremskrafterzeugers verlagert. Die Bremspedalbetätigung wird unmittelbar von dem in Fig.1 gezeigten Drehwinkelsensor 14 erfasst und an die elektronische Steuereinheit 18 weitergeleitet. Diese steuert den Aktuator an und bestromt diesen nach Maßgabe vorgegebener Kennlinien und ggf. unter Berücksichtigung weiterer Parameter, beispielsweise von dem Stabilitätsprogramm 24, dem Antiblockiersystem 26 oder der Abstandskontrolleinrichtung 28. Durch die Bestromung des Aktuators wird das Steuerventil 38 in einen Zustand versetzt, in dem die erste Unterdruckkammer 48 von der ersten Arbeitskammer 50 und die zweite Unterdruckkammer 54 von der zweiten Arbeitskammer 56 isoliert sowie die Arbeitskammern 50 und 56 mit der Umgebungsatmosphäre verbunden sind. Es baut sich ein Überdruck in den Arbeitskammern 50 und 56 auf, der zu einer Verlagerung des Primärkolbens führt. Dadurch baut sich in der in dem Zylindergehäuse 36 ausgebildeten Primärdruckkammer ein Bremsdruck auf, der in einem an dem Bremskrafterzeuger 10 angeschlossenen Fahrzeugbremssystem zum Abbremsen des Fahrzeugs genutzt wird. Die beiden beweglichen Wände 46 und 58 bewegen sich so weit, bis sich das Steuerventil 38 wieder schließt. In diesem Zustand ist das System im Gleichgewicht und es tritt ohne äußere Einwirkung keine weitere Änderung mehr ein.

Wird das Bremspedal von dem Fahrer wieder freigegeben, so bewegt sich das System wieder in die in Fig. 2 gezeigte Stellung zurück. Das Krafteingangsglied 32 wird dabei aufgrund der Wirkung der Pedalgegenkraft-Simulationseinrichtung 94 und weiterer Rückstellfedern in seine Ausgangsstellung zurück bewegt. Diese Rückstellbewegung erfolgt jedoch mit Hysterese.

Während der Ansteuerung des Aktuators erfasst die elektronische Steuereinheit 18 permanent über den Positionssensor 62 die aktuelle Position der zweiten beweglichen Wand 58 und der mit dieser gekoppelten ersten beweglichen Wand 46. Dadurch kann die Ist-Position des Steuerventilgehäuses 40 erfasst werden und mit einer durch die Pedalbetätigung vorgegebenen Soll-Position verglichen werden. Bei einer Abweichung von Ist-Position und Soll-Position, beispielsweise aufgrund einer Veränderung der Pedalstellung durch den Fahrer oder aufgrund anderer äußerer Einflüsse, steuert die elektronische Steuereinheit 18 den Aktuator korrigierend an. Zur ausführlichen Erläuterung der Funktion des Bremskrafterzeugers 10 sei auf die Beschreibung der Patentanmeldung mit dem amtlichen Aktenzeichen DE 10 2004 005 107 verwiesen.

Die Erfindung zeigt eine Möglichkeit auf, wie ein Bremskrafterzeuger hinsichtlich der Einbindung in die elektronische Infrastruktur eines Fahrzeugs deutlich vereinfacht ausgebildet werden kann. Der Bremskrafterzeuger 10 gemäß der Erfindung weist lediglich eine Steckerbuchse 100 auf, über die er mit der Fahrzeugelektronik, insbesondere einem Bordcomputer und einer zentralen Recheneinheit gekoppelt werden kann. Durch die erfindungsgemäße Anordnung und Verkabelung des Bremskrafterzeugers 10 ist es im Gegensatz zum Stand der Technik nicht mehr erforderlich, an einer Vielzahl verschiedener Stellen des Bremskrafterzeugers Anschlüsse und Steckverbinder anzubringen. Dadurch werden der Aufbau, die Montage sowie die Fehleranfälligkeit des Bremskrafterzeugers deutlich verbessert.

## Patentansprüche

1. Bremskrafterzeuger (10) für eine hydraulische Fahrzeugbremsanlage mit
- einem Krafteingangsglied (32), das mit einem Bremspedal (12) koppelbar oder gekoppelt und in einem Basisgehäuse (42) des Bremskrafterzeugers (10) verlagerbar ist,
- einem Hauptbremszylinder (36), in dem ein Primärkolben verlagerbar geführt ist, wobei der Primärkolben mit dem Hauptbremszylinder (36) eine Primärdruckkammer zur Erzeugung eines hydraulischen Bremsdrucks begrenzt,
- einer elektromagnetischen Betätigungskraft-Erzeugungseinrichtung (38) zum Ausüben einer Betätigungskraft auf den Primärkolben und
- wenigstens einer Betriebsstellungs-Erfassungseinrichtung (62) zur Erfassung der gegenwärtigen Betriebsstellung des Bremskrafterzeugers (10),
wobei die Betätigungskraft-Erzeugungseinrichtung (38) nach Maßgabe einer Bremspedalbetätigung ansteuerbar ist,
**dadurch gekennzeichnet, dass** der Bremskrafterzeuger (10) mit einem elektrischen Zentralverbinder (72) versehen ist, in dem Kontaktelemente (82, 84, 88) zum Kontaktieren elektrischer Leitungen (44) zu der Betätigungskraft-Erzeugungseinrichtung (38) und zu der Betriebsstellungs-Erfassungseinrichtung (62) integral vorgesehen sind.

2. Bremskrafterzeuger (10) nach Anspruch 1,
**dadurch gekennzeichnet, dass** der Bremskrafterzeuger (10) ein Steuerventil (38), eine Kammeranordnung (34) und einen elektromagnetischen Aktuator aufweist, wobei die Kammeranordnung (34) mit einer Unterdruckkammer (48) und einer von der Unterdruckkammer (48) durch eine bewegliche Wand (46) getrennte und über das Steuerventil (38) fluidisch miteinander verbindbare Arbeitskammer (50) ausgebildet ist und wobei die Betriebsstellungs-Erfassungseinrichtung (62), insbesondere als Positionssensor, zum Erfassen der gegenwärtigen Position der beweglichen Wand (46) ausgebildet ist.

3. Bremskrafterzeuger (10) nach Anspruch 2,
**dadurch gekennzeichnet, dass** die Kammeranordnung (34) als Tandem-Kammeranordnung mit einer ersten Kammeranordnung und einer von dieser getrennten zweiten Kammeranordnung ausgebildet ist, wobei die erste Kammeranordnung eine erste Unterdruckkammer (48) und eine von dieser durch eine erste bewegliche Wand (46) getrennte erste Arbeitskammer (50) aufweist, wobei weiter die zweite Kammeranordnung eine zweite Unterdruckkammer (54) und eine von dieser durch eine zweite bewegliche Wand (58) getrennte zweite Arbeitskammer (56) aufweist, wobei die erste und zweite Kammeranordnung über das Steuerventil (38) mit Druck beaufschlagbar sind.

4. Bremskrafterzeuger (10) nach Anspruch 2 oder 3,
**dadurch gekennzeichnet, dass** die elektrischen Leitungen (44) von dem Aktuator zu dem Zentralverbinder (72) durch ein zumindest einen Teil (54, 56) der Kammeranordnung (34) durchsetzendes Führungselement (88), insbesondere Führungsrohr, hindurch geführt sind.

5. Bremskrafterzeuger (10) nach einem der vorangehenden Ansprüche,
**dadurch gekennzeichnet, dass** die elektrischen Leitungen (44) von dem Aktuator zu dem Zentralverbinder (72) zumindest in einem Teil (48) der Kammeranordnung (34) spiralförmig oder schraubenförmig verlaufen.

6. Bremskrafterzeuger (10) nach einem der vorangehenden Ansprüche, **gekennzeichnet durch** eine Pedalbetätigungs-Erfassungseinrichtung (94), insbesondere einen an einer Drehachse (D) des Bremspedals (12) angeordneten Drehwinkelsensor, zur Erfassung einer aktuellen Auslenkung des Bremspedals (12).

7. Bremskrafterzeuger (10) nach einem der vorangehenden Ansprüche, **gekennzeichnet durch** eine mit dem Krafteingangsglied (32) koppelbare oder gekoppelte Pedalgegenkraft-Simulationseinrichtung (94).

8. Bremskrafterzeuger (10) nach einem der vorangehenden Ansprüche,
**dadurch gekennzeichnet, dass** die Pedalgegenkraft-Simulationseinrichtung (94) mit einem Pedalgegenkraft-Hydrauliksystem ausgebildet ist, wobei das Pedalgegenkraft-Hydrauliksystem mit einem elektrisch ansteuerbaren Trennventil (96) versehen ist, das in einer ersten Stellung, vorzugsweise seiner Passivstellung, das Pedalgegenkraft-Hydrauliksystem (94) und das Krafteingangsglied (32) hydraulisch voneinander entkoppelt und eine im Wesentlichen ungedämpfte Bewegung des Krafteingangsglieds (32) zulässt und das in einer zweiten Stellung, vorzugsweise seiner Aktivstellung, das Pedalgegenkraft-Hydrauliksystem (94) und das Krafteingangsglied (32) hydraulisch miteinander koppelt.

9. Bremskrafterzeuger (10) nach einem der vorangehenden Ansprüche,
**dadurch gekennzeichnet, dass** elektrische Kontaktelemente zum Kontaktieren elektrischer Leitungen zu der Pedalbetätigungs-Erfassungseinrichtung (14) oder/und zu dem Trennventil (96) in dem Zentralverbinder (72) oder in einem in räumlicher Nähe zu dem Zentralverbinder angeordneten Zusatzverbinder (98) integriert sind.

10. Bremskrafterzeuger (10) nach einem der vorangehenden Ansprüche, **gekennzeichnet durch** eine elektronische Steuereinrichtung (18), die die Betätigungskraft-Erzeugungseinrichtung (38) nach Maßgabe eines Ausgangssignals der Betriebsstellungs-Erfassungseinrichtung (62) ansteuert.

11. Bremskrafterzeuger (10) nach Anspruch 10,
**dadurch gekennzeichnet, dass** die elektronische Steuereinrichtung (18) mit der Pedalbetätigungs-Erfassungseinrichtung (14) oder/und dem Trennventil (96) elektrisch verbunden ist.

12. Bremskrafterzeuger (10) nach einem der Ansprüche 10 oder 11,
**dadurch gekennzeichnet, dass** die elektronische Steuereinrichtung (18) mechanisch unmittelbar an dem Zentralverbinder (72) und gegebenenfalls an dem wenigstens einen Zusatzverbinder (98) angebracht und elektrisch mit diesen verbunden ist.

13. Bremskrafterzeuger (10) nach einem der vorangehenden Ansprüche,
**dadurch gekennzeichnet, dass** der Zentralverbinder (72) integral mit der Betriebsstellungs-Erfassungseinrichtung (62) ausgebildet ist.

14. Bremskrafterzeuger (10) nach einem der vorangehenden Ansprüche,
**dadurch gekennzeichnet, dass** der Zentralverbinder (72) mit einem Anschlussverbinder (80) zum Kontaktieren elektrischer Leitungen (44) zu der Betätigungskraft-Erzeugungseinrichtung (38) gekoppelt oder koppelbar ist.

15. Bremskrafterzeuger (10) nach Anspruch 14,
**dadurch gekennzeichnet, dass** der Anschlussverbinder (80) integral mit einem Aufnahmelement (64) ausgebildet ist, wobei das Aufnahmeelement (64) die Betriebsstellungs-Erfassungseinrichtung (62) an dem Basisgehäuse (42) festlegt.

16. Bremskrafterzeuger (10) nach einem der vorangehenden Ansprüche,
**dadurch gekennzeichnet, dass** der Zentralverbinder (72) und gegebenenfalls der Zusatzverbinder (98) an dem Basisgehäuse (42) festgelegt oder festlegbar sind.

17. Bremssystem für ein Kraftfahrzeug mit einem Bremskrafterzeuger (10) nach einem der vorangehenden Ansprüche.

## Claims

1. Brake force generator (10) for a vehicle hydraulic brake system having
- a force input element (32), which is connectable or connected to a brake pedal (12) and displaceable in a base housing (42) of the brake force generator (10),
- a master brake cylinder (36), in which a primary piston is displaceably guided,
wherein the primary piston with the master brake cylinder (36) delimits a primary pressure chamber for generating a hydraulic brake pressure,
- an electromagnetic actuating force generating device (38) for exerting an actuating force on the primary piston and
- at least one operating position detecting device (62) for detecting the present operating position of the brake force generator (10),
wherein the actuating force generating device (38) is controllable in accordance with a brake pedal actuation,
**characterized in that** the brake force generator (10) is provided with a central connector (72), in which contact elements (82, 84, 88) for contacting electric lines (44) to the actuating force generating device (38) and to the operating position detecting device (62) are integrally provided.

2. Brake force generator (10) according to claim 1,
**characterized in that** the brake force generator (10) comprises a control valve (38), a chamber arrangement (34) and an electromagnetic actuator, wherein the chamber arrangement (34) is designed with a vacuum chamber (48) and a working chamber (50), which is separated from the vacuum chamber (48) by a movable wall (46) and fluidically connectable to the vacuum chamber (48) by the control valve (38), and wherein the operating position detecting device (62), in particular in the form of a position sensor, is designed to detect the present position of the movable wall (46).

3. Brake force generator (10) according to claim 2,
**characterized in that** the chamber arrangement (34) is designed as a tandem chamber arrangement comprising a first chamber arrangement and a second chamber arrangement separated from the first, wherein the first chamber arrangement comprises a first vacuum chamber (48) and a first working chamber (50) separated from the first vacuum chamber (48) by a first movable wall (46), wherein moreover the second chamber arrangement comprises a second vacuum chamber (54) and a second working chamber (56) separated from the second vacuum chamber (54) by a second movable wall (58),
wherein the first and second chamber arrangement may be pressurized by means of the control valve (38).

4. Brake force generator (10) according to claim 2 or 3,
**characterized in that** the electric lines (44) from the actuator to the central connector (72) are run through a guide element (88), in particular a guide tube, which penetrates at least one part (54, 56) of the chamber arrangement (34).

5. Brake force generator (10) according to one of the preceding claims,
**characterized in that** the electric lines (44) from the actuator to the central connector (72) extend spirally or helically at least in one part (48) of the chamber arrangement (34).

6. Brake force generator (10) according to one of the preceding claims,
**characterized by** a pedal actuation detecting device (14), in particular an angle-of-rotation sensor disposed at an axis of rotation (D) of the brake pedal (12), for detecting an actual deflection of the brake pedal (12).

7. Brake force generator (10) according to one of the preceding claims,
**characterized by** a pedal counterforce simulating device (94), which is connectable or connected to the force input element (32).

8. Brake force generator (10) according to one of the preceding claims,
**characterized in that** the pedal counterforce simulating device (94) is designed with a pedal counterforce hydraulic system, wherein the pedal counterforce hydraulic system is provided with an electrically controllable block valve (96), which in a first position, preferably its passive position, uncouples the pedal counterforce hydraulic system (94) and the force input element (32) hydraulically from one another and allows a substantially undamped movement of the force input element (32) and which in a second position, preferably its active position, connects the pedal counterforce hydraulic system (94) and the force input element (32) hydraulically to one another.

9. Brake force generator (10) according to one of the preceding claims,
**characterized in that** electrical contact elements for contacting electric lines to the pedal actuation detecting device (14) or/and to the block valve (94) are integrated in the central connector (72) or in an auxiliary connector (98) disposed in spatial proximity to the central connector.

10. Brake force generator (10) according to one of the preceding claims,
**characterized by** an electronic control device (18), which controls the actuating force generating device (38) in accordance with an output signal of the operating position detecting device (62).

11. Brake force generator (10) according to claim 10,
**characterized in that** the electronic control device (18) is electrically connected to the pedal actuation detecting device (14) or/and the block valve (96).

12. Brake force generator (10) according to one of claims 10 or 11,
**characterized in that** the electronic control device (18) is mechanically fitted directly on, and electrically connected to, the central connector (72) and optionally the at least one auxiliary connector (98).

13. Brake force generator (10) according to one of the preceding claims,
**characterized in that** the central connector (72) is constructed integrally with the operating position detecting device (62).

14. Brake force generator (10) according to one of the preceding claims,
**characterized in that** the central connector (72) is connected or connectable to a terminal connector (80) for contacting electric lines (44) to the actuating force generating device (38).

15. Brake force generator (10) according to claim 14,
**characterized in that** the terminal connector (80) is constructed integrally with a receiving element (64), wherein the receiving element (64) fastens the operating position detecting device (62) to the base housing (42).

16. Brake force generator (10) according to one of the preceding claims,
**characterized in that** the central connector (72) and optionally the auxiliary connector (98) are fastened or fastenable to the base housing (42).

17. Brake system for a motor vehicle having a brake force generator (10) according to one of the preceding claims.

## Revendications

1. Générateur de force de freinage (10) pour un système de freinage hydraulique de véhicule, comprenant
- un organe d'entrée de force (32) qui peut être couplé ou est couplé à une pédale de frein (12) et peut être déplacé dans un boîtier de base (42) du générateur de force de freinage (10),
- un maître-cylindre de frein (36), dans lequel un piston primaire est guidé déplaçable, ledit piston primaire délimitant avec le maître-cylindre de frein (36) une chambre de compression primaire pour produire une pression de freinage hydraulique,
- un dispositif de production de force d'actionnement électromagnétique (38) pour exercer une force d'actionnement sur le piston primaire, et
- au moins un dispositif de détection de position de fonctionnement (62) pour détecter la position de fonctionnement actuelle du générateur de force de freinage (10),
**caractérisé en ce que** le générateur de force de freinage (10) est muni d'un connecteur central électrique (72), dans lequel sont intégrés des éléments de contact (82, 84, 88) pour mettre en contact des lignes électriques (44) avec le dispositif de production de force d'actionnement (38) et le dispositif de détection de position de fonctionnement (62).

2. Générateur de force de freinage (10) selon la revendication 1,
**caractérisé en ce que** le générateur de force de freinage (10) présente une soupape de commande (38), un ensemble chambre (34) et un actionneur électromagnétique, ledit ensemble chambre (34) comportant une chambre de dépression (48) et une chambre de travail (50) séparée de la chambre de dépression (48) par une paroi mobile (46) et pouvant être mise en communication fluidique avec cette dernière par le biais de la soupape de commande (38), et le dispositif de détection de position de fonctionnement (62) étant conçu notamment comme un détecteur de position pour détecter la position actuelle de la paroi mobile (46).

3. Générateur de force de freinage (10) selon la revendication 2,
**caractérisé en ce que** l'ensemble chambre (34) est conçu comme un ensemble chambre tandem comportant un premier ensemble chambre et un deuxième ensemble chambre séparé de ce dernier, ledit premier ensemble chambre présentant une première chambre de dépression (48) et une première chambre de travail (50) séparée de cette dernière par une première paroi mobile (46), et ledit deuxième ensemble chambre présentant une deuxième chambre de dépression (54) et une deuxième chambre de travail (56) séparée de cette dernière par une deuxième paroi mobile (58), le premier et le second ensemble chambre pouvant être mis sous pression par l'intermédiaire de la soupape de commande (38).

4. Générateur de force de freinage (10) selon la revendication 2 ou 3,
**caractérisé en ce que** les lignes électriques (44) partant de l'actionneur et allant vers le connecteur central (72) passent par un élément de guidage (88), notamment un tube de guidage, qui traverse pour le moins une partie (54, 56) de l'ensemble chambre (34).

5. Générateur de force de freinage (10) selon l'une des revendications précédentes,
**caractérisé en ce que** les lignes électriques (44) partant de l'actionneur et allant vers le connecteur central (72) passent, en forme de spirale ou d'hélice, pour le moins dans une partie (48) de l'ensemble chambre (34).

6. Générateur de force de freinage (10) selon l'une des revendications précédentes,
**caractérisé par** un dispositif de détection d'actionnement de pédale (94), notamment par un détecteur d'angle monté sur un axe de rotation (D) de la pédale de frein (12), pour détecter une déviation actuelle de la pédale de frein (12).

7. Générateur de force de freinage (10) selon l'une des revendications précédentes,
**caractérisé par** un dispositif de simulation de force antagoniste de pédale (94), lequel peut être couplé ou est couplé à l'organe d'entrée de force (32).

8. Générateur de force de freinage (10) selon l'une des revendications précédentes,
**caractérisé en ce que** le dispositif de simulation de force antagoniste de pédale (94) comporte un système hydraulique de force antagoniste de pédale, ce dernier étant muni d'une soupape de séparation (96) actionnable électriquement qui, dans une première position, de préférence dans sa position passive, découple hydrauliquement l'un de l'autre le système hydraulique de force antagoniste de la pédale (94) et l'organe d'entrée de force (32) et autorise un mouvement pour l'essentiel non amorti de l'organe d'entrée de force (32), et qui, dans une seconde position, de préférence dans sa position active, couple l'un à l'autre le système hydraulique de force antagoniste de pédale (94) et l'organe d'entrée de force (32).

9. Générateur de force de freinage (10) selon l'une des revendications précédentes,
**caractérisé en ce que** les éléments de contact électriques pour mettre en contact des lignes électriques (44) avec le dispositif de détection d'actionnement de pédale (14). ou/et la soupape de séparation (96) sont intégrés dans le connecteur central (72) ou dans un connecteur supplémentaire (98) disposé à proximité du connecteur central.

10. Générateur de force de freinage (10) selon l'une des revendications précédentes,
**caractérisé par** un dispositif de commande électronique (18) qui commande le dispositif de production de force d'actionnement (38) en fonction d'un signal de sortie émis par le dispositif de détection de position de fonctionnement (62).

11. Générateur de force de freinage (10) selon la revendication 10,
**caractérisé en ce que** le dispositif de commande électronique (18) est relié électriquement au dispositif de détection d'actionnement de pédale (14) ou/et à la soupape de séparation (96).

12. Générateur de force de freinage (10) selon l'une des revendications 10 ou 11,
**caractérisé en ce que** le dispositif de commande électronique (18) est monté mécaniquement directement sur le connecteur central (72) et, le cas échéant, sur ledit connecteur supplémentaire (98), et relié électriquement à ces derniers.

13. Générateur de force de freinage (10) selon l'une des revendications précédentes,
**caractérisé en ce que** le connecteur central (72) est intégré dans le dispositif de détection de position de fonctionnement (62).

14. Générateur de force de freinage (10) selon l'une des revendications précédentes,
**caractérisé en ce que** le connecteur central (72) est couplé ou peut être couplé avec un connecteur de raccordement (80) pour mettre en contact des lignes électriques (44) avec le dispositif de production de force d'actionnement (38).

15. Générateur de force de freinage (10) selon la revendication 14,
**caractérisé en ce que** ledit connecteur de raccordement (80) est intégré dans un élément de logement (64), ledit élément de logement (64) maintient le dispositif de détection de position de fonctionnement (62) sur le boîtier de base (42).

16. Générateur de force de freinage (10) selon l'une des revendications précédentes,
**caractérisé en ce que** le connecteur central (72) et, le cas échéant, le connecteur supplémentaire (98) sont fixés ou peuvent être fixés sur le boîtier de base (42).

17. Système de freinage pour un véhicule automobile, comprenant un générateur de force de freinage (10) selon l'une des revendications précédentes.
